# EUROPEAN PATENT SPECIFICATION

(11) **EP 1 826 368 B1**
(45) Date of publication and mention of the grant of the patent: **02.04.2008**
(21) Application number: 07101096.1
(22) Date of filing: 24.01.2007
(51) Int. Cl.: F01M 1/08, F01P 3/08, F02F 3/22, H02K 9/19

(54) **Cooling structure for vehicular generator**
Kühlstruktur für einen Fahrzeuggenerator
Structure de refroidissement pour générateur de véhicule

(30) Priority: 28.02.2006 JP 2006052762
(43) Date of publication of application: 29.08.2007
(73) Proprietor: HONDA MOTOR CO., LTD., Tokyo 107-8556 (JP)
(72) Inventor: Nagahashi, Yoshiki, Wako-shi Saitama 351-0193 (JP); Yoneyama, Masaki, Wako-shi Saitama 351-0193 (JP); Kono, Naoki, Wako-shi Saitama 351-0193 (JP); Minami, Kohji, Wako-shi Saitama 351-0193 (JP)
(74) Representative: Rupp, Christian

(56) References cited:
- EP-A1- 1 288 460
- US-A- 5 619 956
- US-A1- 2003 098 203

## Description

The present invention relates to structure for cooling a vehicular generator by oil.

For this type of cooling structure for a vehicular generator, an example that oil is sprayed on an outer rotor by jetting oil toward annular space between a peripheral surface of the outer rotor of the generator and an inner surface of a generator cover and the generator is thus cooled is disclosed (refer to Patent document 1).

JP Patent No. 2986470

As for the structure for cooling the generator disclosed in Patent document 1, a jet nozzle (an oil jet) that jets oil toward the annular space between the peripheral surface of the outer rotor of the generator and the inner surface of the generator cover is fitted and fastened into an end of an oil passage for cooling the generator bored dedicatedly in a crankcase.
The oil passage for cooling the generator communicates with an oil gallery in the crankcase.
Therefore, oil discharged by the drive of an oil pump reaches the oil passage formed for cooling the generator through the oil gallery and is jetted toward the annular space from the jet nozzle.

In the structure for cooling the generator disclosed in Patent document 1 as described above, a dedicated oil passage is required to be formed in the crankcase to cool the generator, a process for it is required, and the cost is increased.
As a path of the oil passage that reaches the required position in which the jet nozzle is arranged is required to be determined in consideration of the form of the crankcase and workability, it is not easy to compact the crankcase.

The invention is made in view of such a problem and the object is to provide cooling structure for a vehicular generator where oil is supplied to an oil jet in a required position, is jetted from the oil jet and can cool the generator without forming a dedicated oil passage for cooling the generator.

To achieve the object, the invention disclosed in Claim 1 is based upon cooling structure for a vehicular generator that cools the generator provided to one end of a crankshaft by jetting oil, wherein a piston cooling oil passage on the way of which a piston cooling oil jet for jetting oil to the piston is arranged on an axis parallel to the crankshaft, and a generator cooling oil jet that cools the generator by jetting oil is provided to the end of the piston cooling oil passage.

The invention disclosed in Claim 2 is based upon the cooling structure for the vehicular generator disclosed in Claim 1, wherein an engine speed detector that detects the number of revolutions of the crankshaft is arranged next to space around the generator toward which oil is jetted from the oil jet for cooling the generator.

The invention disclosed in Claim 3 is based upon the cooling structure for the vehicular generator disclosed in Claim 1 or 2, wherein the oil jet for cooling the generator is located outside the generator when the oil jet is viewed in a direction of the crankshaft and jets oil in a direction parallel to the crankshaft.

According to the cooling structure for the vehicular generator disclosed in Claim 1, as the oil jet for cooling the generator by jetting oil is provided to the end of the piston cooling oil passage on the way of which the oil jet for cooling piston is formed, a dedicated oil passage for supplying oil for cooling the generator to the oil jet for cooling the generator is not required to be formed, working man-hours are reduced, and the cost can be reduced.

According to the cooling structure for the vehicular generator disclosed in Claim 2, as the engine speed detector is arranged next to the space around the generator toward which oil is jetted from the oil jet for cooling the generator, the space toward which oil is jetted from the oil jet for cooling the generator can be secured utilizing the space for arranging the engine speed detector and the generator can be uniformly and efficiently cooled without large-sizing the internal combustion engine.

According to the cooling structure for the vehicular generator disclosed in Claim 3, as the oil jet for cooling the generator is located outside the generator when the oil jet is viewed in the direction of the crankshaft and jets oil in the direction parallel to the crankshaft, the space toward which oil is jetted from the oil jet for cooling the generator is the space around the generator and as oil is not jetted directly to the generator, friction to the turning of the rotor of the generator is never increased.

Fig. 1 is a left side view showing an internal combustion engine equivalent to one embodiment of the invention;
Fig. 2 is a right side view showing a section of the same part;
Fig. 3 is a plan in which the same part is omitted;
Fig. 4 is a sectional view viewed along a line IV-IV in Fig. 1;
Fig. 5 is a schematic sectional view viewed along a line V-V in Fig. 4;
Fig. 6 is a bottom view showing a crankcase;
Fig. 7 is a front view showing the crankcase;
Fig. 8 is a sectional view showing an upper crankcase;
Fig. 9 is an exploded sectional view showing a part of the upper crankcase shown in Fig. 8; and
Fig. 10 is a side view showing a main part in which a part of the upper crankcase is omitted and showing the arrangement structure of a oil jet piping.

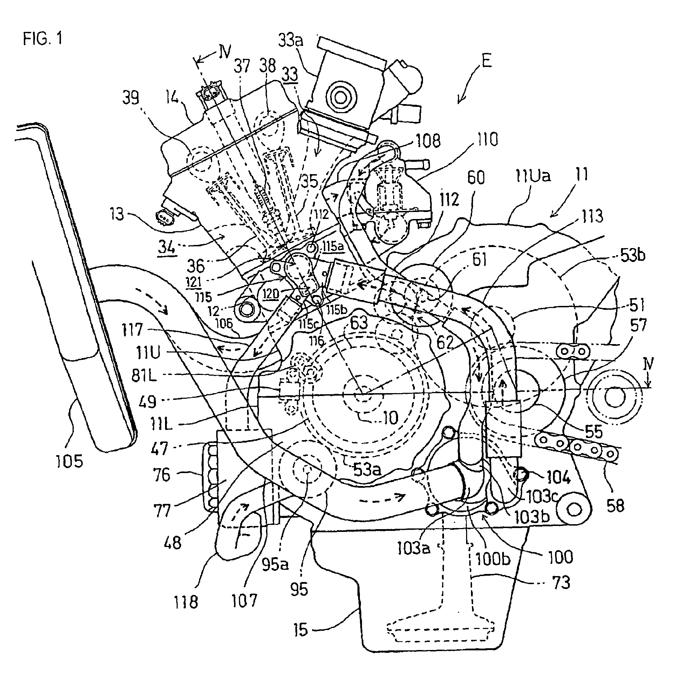

Referring to Figs. 1 to 10, one embodiment of the invention will be described below.
An internal combustion engine E in this embodiment is an in-line four-cylinder water-cooled internal combustion engine where four cylinders are arranged in series and is mounted in a motorcycle transversely with a crankshaft 10 directed sideways.
In this specification, a forward direction of the vehicle shall be forward, its reverse direction shall be backward, a leftward direction in the forward direction shall be leftward, and a rightward direction shall be rightward.

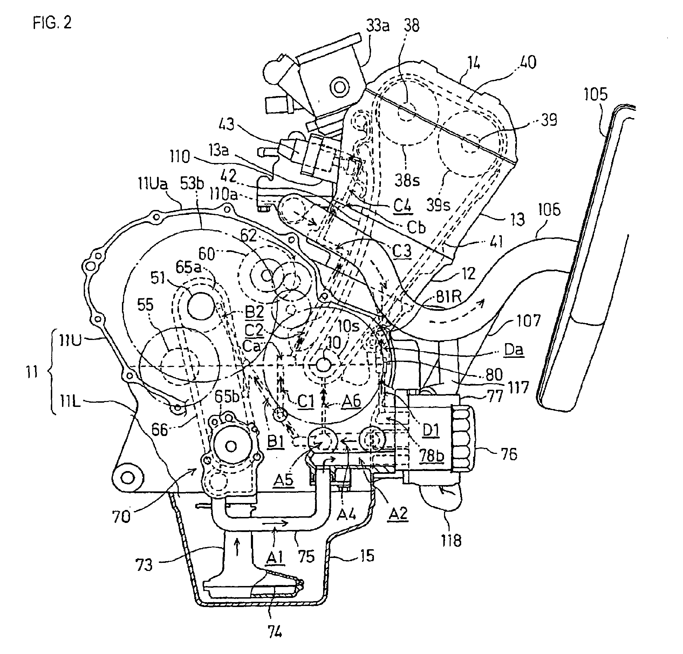

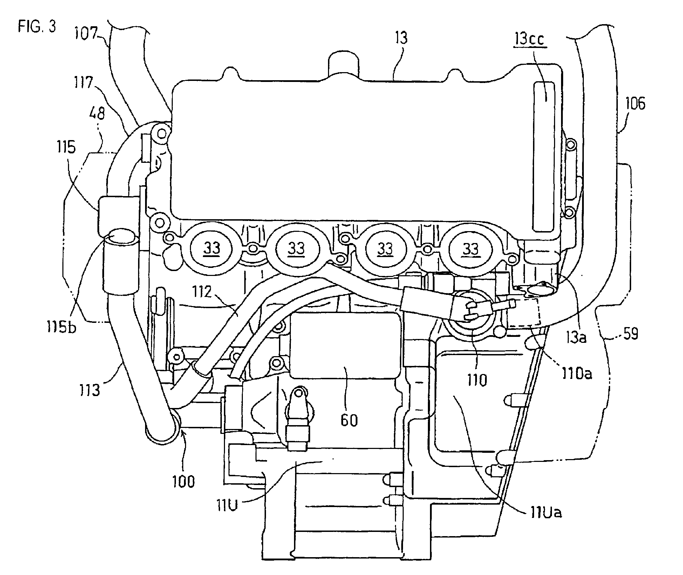

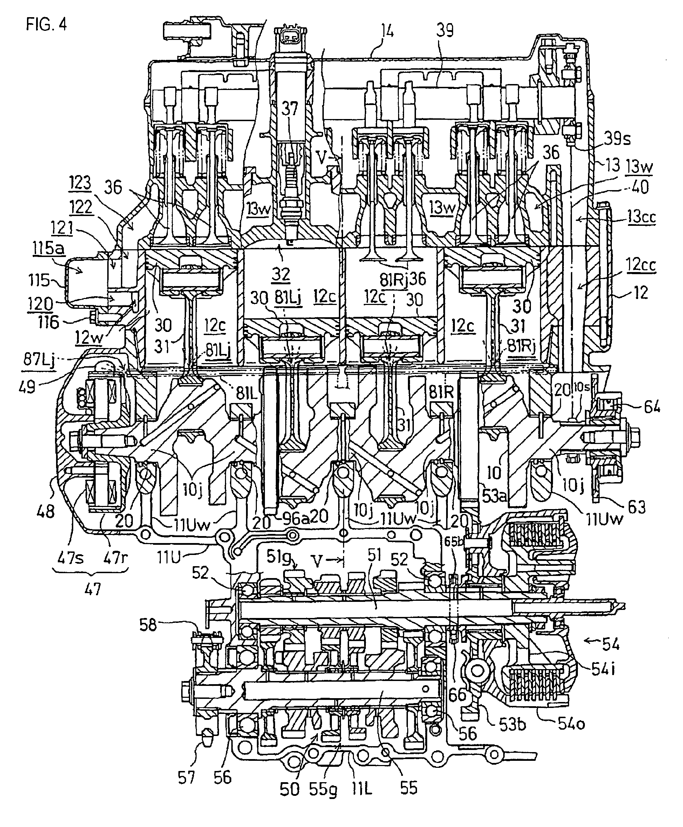

Fig. 1 is a left side view showing the internal combustion engine E, Fig. 2 is a right side view a part of which is a sectional view, Fig. 3 is a plan a part of which is omitted, and Fig. 4 is a sectional view viewed along a line IV-IV shown in Fig. 1.

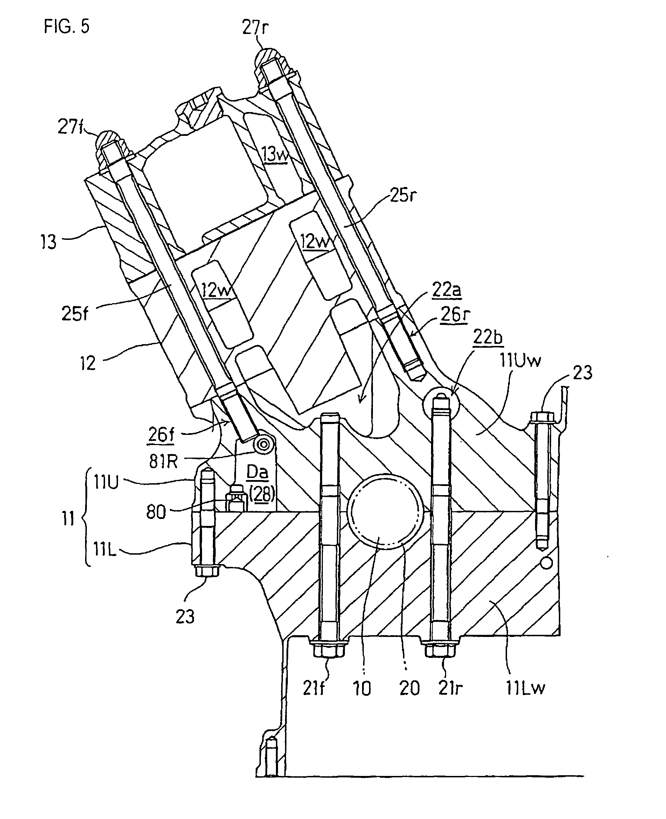

Fig. 5 is a schematic sectional view viewed along a line V-V shown in Fig. 4.

A crankcase 11 that journals the crankshaft 10 is vertically divided, four cylinders 12c are arrayed in series on an upper crankcase 11U, a cylinder block 12 and a cylinder head 13 respectively integrated are overlapped and are stood with them tilted slightly forward, and the cylinder head 13 is covered with a cylinder head cover 14.
In the meantime, an oil pan 15 is attached under a lower crankcase 11L.

Referring to Figs. 4 and 5, each journal wall 11Uw, 11Lw of the upper crankcase 11U and the lower crankcase 11L supports a journal 10j of the crankshaft 10 via a main bearing 20 with the journal vertically held between the journal walls and journals the crankshaft 10 so that the crankshaft 10 can be rotatably journalled.
As the internal combustion engine according to the invention is the in-line 4-cylinder internal combustion engine E, the crankshaft 10 is provided with five journals 10j and is rotatably supported by upper and lower each five journal walls 11Uw, 11Lw of the upper crankcase 11U and the lower crankcase 11L so that the crankshaft 10.

The upper crankcase 11U and the lower crankcase 11L are integrally fastened by bolts by joining respective faces.
Referring to Fig. 5, in each of each five journal walls 11Uw, 11Lw of the upper crankcase 11U and the lower crankcase 11L, stud bolts 21f, 21r pierce the lower crankcase 11L straight upward from the downside with semicircular parts holding the crankshaft 10 between the stud bolts, are screwed into long tapped holes of the upper crankcase 11U and are tightened.

The end of the stud bolt 21f on the front side is protruded into a cavity 22a of the crankcase after the stud bolt is screwed into the tapped hole of the upper crankcase 11U and the end of the stud bolt 21r on the rear side is also protruded into a circular hole 22b bored in parallel with the crankshaft 10 in the upper crankcase 11U after the stud bolt is screwed into the tapped hole of the upper crankcase 11U.

Therefore, the concentration in a part of stress which is caused by screwing and tightening the stud bolts 21f, 21r and which acts on the vicinity of the tapped holes can be reduced.
The upper crankcase 11U and the lower crankcase 11L are fastened not only by the stud bolts 21f, 21r but by plural bolts 23 in required locations (see Fig. 5).

The cylinder block 12 is superimposed on the upper crankcase 11U by mutually joining faces in a state in which the cylinder block is a little tilted forward, the cylinder head 13 is superimposed on the cylinder block 12, front and rear stud bolts 25f, 25r pierce the cylinder block 12 that adjoins the journal wall 11Uw of the upper crankcase 11U and the cylinder head 13 from the upside, the stud bolts are screwed into tapped holes 26f, 26r bored in the upper crankcase 11U, and the cylinder block and the cylinder head are integrally fastened.

Actually, lower ends of the stud bolts 25f, 25r are screwed into the tapped holes 26f, 26r bored on the joined face of the upper crankcase 11U, the stud bolts 25f, 25r are protruded upward in an embedding state, through holes of the cylinder block 12 are fitted to the stud bolts 25f, 25r, the cylinder block 12 is superimposed on the joined face of the upper crankcase 11U, next, through holes of the cylinder head 13 are fitted to the stud bolts 25f, 25r that pierce the through holes of the cylinder block 12 and are protruded from them, and the cylinder head 13 is superimposed on an upper joined face of the cylinder block 12.

The stud bolts 25f, 25r are further screwed into the tapped holes 26f, 26r together with the cap nuts 27f, 27r by screwing cap nuts 27f, 27r on male screws at the upper ends of the stud bolts 25f, 25r that pierce the through holes of the cylinder head 13 and are protruded from them and tightening them, and the cylinder block 12 and the cylinder head 13 are integrally fastened to the upper crankcase 11U.

A cavity 28 is formed in the three journal walls 11Uw in the center of the upper crankcase 11U so that the cavity is open to the joined face of the case and the front tapped hole 26f passes the joined face to the cylinder block 12 and reaches the cavity 28.

The stud bolt 25f that pierces the cylinder head 13 and the cylinder block 12 is screwed into the tapped hole 26f and the end is open to the cavity 28.
Therefore, the concentration in a part of stress which is caused by screwing and tightening the stud bolt 25f and which acts on the vicinity of the tapped hole in the upper crankcase 11U can be reduced.

As described above, a piston 30 is fitted into each cylinder bore 12c of four cylinders of the cylinder block 12 integrally fastened to the upper crankcase 11U so that the piston 30 can be reciprocated and is coupled to the crankshaft 10 via a connecting rod 31.

In the cylinder head 13, every cylinder bore 12c, a combustion chamber 32 is formed opposite to the piston 30, an intake port 33 which is open to the combustion chamber 32 and which is opened and closed by a pair of intake valves 35 is extended backward, an exhaust port 34 which is opened and closed by a pair of exhaust valves 36 is extended forward, and further, an ignition plug 37 is installed opposite to the combustion chamber 32.
A throttle body 33a is coupled to an opening on the upstream side of the intake port 33, an intake pipe not shown is coupled on the upstream side of the throttle body, and an exhaust pipe is coupled to an opening on the downstream side of the exhaust port 34.

Each intake valve 35 and each exhaust valve 36 are opened and closed in synchronization with the rotation of the crankshaft 10 by an intake camshaft 38 and an exhaust camshaft 39 rotatably journalled by the cylinder head 13.
Therefore, cam sprockets 38s, 39s are fitted to right ends of the camshaft 38, 39, a timing chain 40 is put between a drive sprocket 10s fitted in the vicinity of the right end of the crankshaft 10 and each cam sprocket 38s, 39s (see Figs. 2 and 4), and the timing chain is driven at revolution speed equivalent to a half of the revolution speed of the crankshaft 10.

Cam chain chambers 12cc, 13cc for arranging the timing chain 40 are formed at the right ends of the cylinder block 12 and the cylinder head 13 (see Fig. 4), cam chain guides 41, 42 are provided in the cam chain chambers 12cc, 13cc along the timing chain 40 before and behind, the rear cam chain guide 42 is pressed by a hydraulic type cam chain tensioner 43, presses the timing chain 40 and applies suitable tension (see Fig. 2).
The cam chain tensioner 43 is attached to a tensioner fixing boss 13a protruded backward from a rear face of the right end of the cylinder head 13 as shown in Fig. 2.

In the meantime, referring to Fig. 4, an outer rotor 47r of an AC generator 47 is fitted to the left end of the crankshaft 10 protruded leftward from the leftmost journal walls 11Uw, 11Lw forming the left side wall of the crankcase 11, an inner stator 47s provided with a magneto coil of the AC generator 47 is supported by a generator cover 48 covering the AC generator 47 from the left side, and is arranged in the outer rotor 47r.

A pulser coil 49 which is an engine speed detector for detecting the number of revolutions of the crankshaft 10 is arranged near to the front of the outer periphery of the outer rotor 47r of the AC generator 47 in the generator cover 48.

A transmission 50 is arranged at the back of the crankshaft 10 in the crankcase 11.
The transmission 50 is a constant-mesh type gear transmission, a main shaft 51 is journalled to the upper crankcase 11U via a bearing 52 so that the main shaft can be rotated on the diagonal upside at the back of the crankshaft 10, a counter shaft 55 is journalled via a bearing 56 so that the counter shaft can be rotated with the counter shaft held between the joined faces of the upper crankcase 11U and the lower crankcase 11L at the back of the crankshaft 10, opposite gears forming a pair in speed change gear groups 51g, 55g mounted on the main shaft 51 and the counter shaft 55 respectively parallel to the crankshaft 10 are engaged, each gear is fitted to the shaft via a spline, and speed is changed by the shift of gears by a shift mechanism functioning as a shifter.

A multiple disc friction clutch 54 is provided at the right end of the main shaft 51, a primary driven gear 53b supported by a clutch outer 54o of the friction clutch 54 so that the primary driven gear is rotated together with the clutch outer and a primary drive gear 53a formed in a crank web on the rightmost side of the crankshaft 10 are engaged, and a primary deceleration mechanism is thus configured.
A clutch inner 54i on the output side of the friction clutch 54 is fitted to the main shaft 51 via a spline and therefore, the rotation of the crankshaft 10 is transmitted to the main shaft 51 via the primary deceleration mechanisms 53a, 53b and the friction clutch 54.

The rotation of the main shaft 51 is transmitted to the counter shaft 55 via the engagement of the speed change gear groups 51g, 55g.
The counter shaft 55 also function as an output shaft, an output sprocket 57 is fitted at the left end that pierces the crankcase 11 leftward and is protruded outside, a transmission chain 58 is put between the output sprocket and a driven sprocket of a rear wheel not shown, a secondary deceleration mechanism is thus configured, and motive power is transmitted to the rear wheel via the secondary deceleration mechanism.

As shown in Fig. 4, a driven gear for starting 63 is journalled via a one-way clutch 64 on the right side of the drive sprocket 10s on the crankshaft 10.
A starter motor 60 that starts the internal combustion engine E is attached to an upper face of the center of the crankcase 11 as shown in Fig. 3.

A right part of an upper wall at the back of a part to which the cylinder block 12 is connected of the upper crankcase 11U greatly overhangs upward to house the friction clutch 54 and the primary driven gear 53b and the starter motor 60 is attached along the left side of the overhanging part 11Ua.
The right side of the friction clutch 54 is covered with a clutch cover 59 (see Fig. 3).

A driving gear shaft 61 protruded on the right side of the starter motor 60 pierces a side wall of the overhanging part 11Ua of the upper crankcase 11U to its inside and a speed reducing gear mechanism 62 is inserted between the driving gear shaft 61 and the driven gear 63 for starting.
Therefore, the speed of the revolution of the driving gear shaft 61 by the drive of the starter motor 60 is reduced by the speed reducing gear mechanism 62, the revolution is transmitted to the driven gear 63 for starting, the revolution of the driven gear 63 for starting is transmitted to the crankcase 10 via the one-way clutch 64, and the internal combustion engine E is started.

As shown in Fig. 4, a drive sprocket 65a is rotatably journalled next to the left side of the primary driven gear 53b of the main shaft 51, an extended protrusion of the drive sprocket 65a is fitted into a hole of the primary driven gear 53b, and the drive sprocket is turned integrally with the primary driven gear 53b.

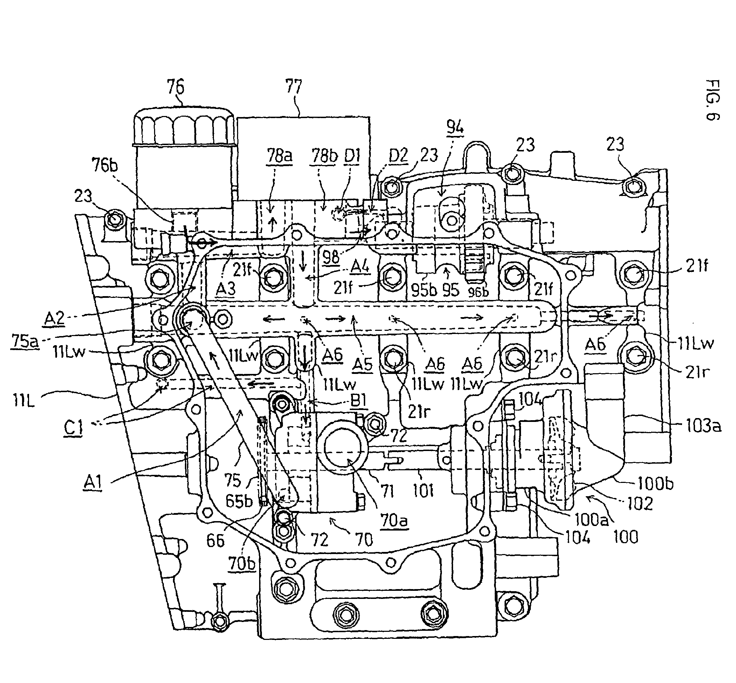

Referring to Fig. 6 which is a bottom view showing the crankcase 11 viewed from the downside, an oil pump 70 and a water pump 100 are attached to the lower crankcase 11L with them laterally arranged on the downside of the main shaft 51.

The oil pump 70 on the right side (on the left side in Fig. 6) is attached to the inside of the lower crankcase 11L by bolts 72 from the downside, the water pump 100 on the left side (on the right side in Fig. 6) is attached to a left side wall of the lower crankcase 11L by bolts 104 by fitting it from the outside, and a drive shaft 71 protruded on the left side of the oil pump 70 and a drive shaft 101 protruded on the right side of the water pump 100 are coaxially coupled.

The drive shaft 71 of the oil pump 70 is also protruded rightward and a driven sprocket 65b is fitted to its right end.
The drive sprocket 65a provided to the main shaft 51 is located above the driven sprocket 65b and an endless chain 66 is put between the drive sprocket 65a and the driven sprocket 65b (see Fig. 2).

Therefore, the rotation of the crankshaft 10 is transmitted from the drive sprocket 65a integrated with the primary driven gear 53b of the primary deceleration mechanism to the driven sprocket 65b via the endless chain 66 and rotates the drive shaft 71 of the oil pump 70 and the drive shaft 101 of the water pump 100 together with the driven sprocket 65b.

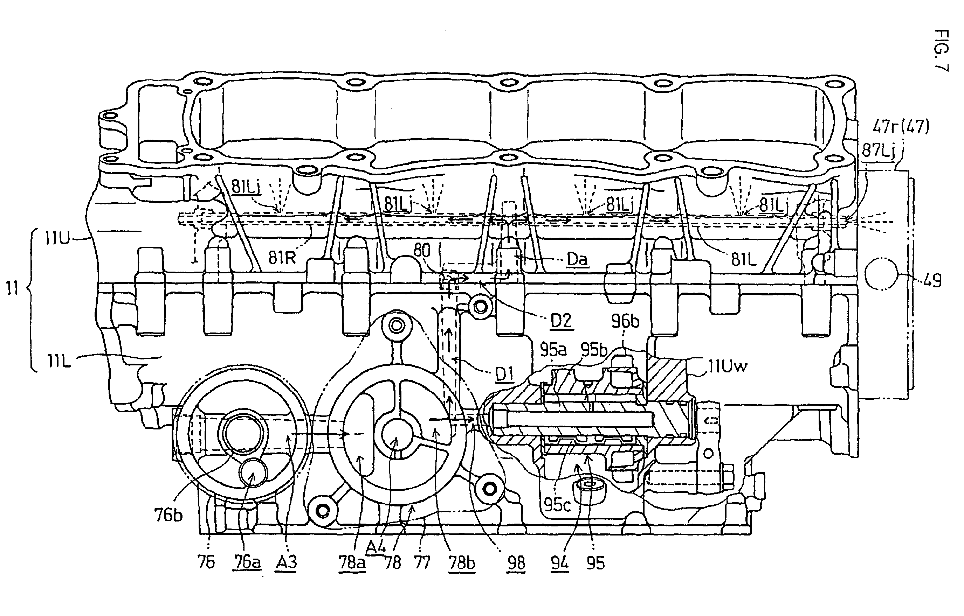

Referring to Fig. 6 showing the lower crankcase 11L viewed from the downside, a balancer chamber 94 is formed between the front of the central journal wall 11Uw corresponding to the cylinder on the center side and the front of the journal wall 11Uw adjacent on the left side (on the right side in Fig. 6) of the above-mentioned journal wall, both ends of a balancer shaft 95a are supported by the right and left journal walls 11Uw, 11Uw in the balancer chamber 94, and a secondary balancer 95 is installed.
The secondary balancer 95 is located in downward diagonal front of the crankshaft 10 in the side view shown in Fig. 1.
Referring to Fig. 7 which is a front view showing the crankcase 11, as to the secondary balancer 95, balance weight 95b is journalled by the balancer shaft 95a via a needle bearing 95c and a balancer driven gear 96b is mounted on an outer periphery of a boss of the balance weight 95b.

The balancer driven gear 96b of the secondary balancer 95 is engaged with a balancer drive gear 96a (see Fig. 4) having the double number of teeth of the balancer driven gear 96b formed in the crank web of the crankshaft 10.
Therefore, the balance weight 95b of the secondary balancer 95 is turned at the double revolution speed of the crankshaft 10 and the secondary balancer absorbs secondary vibration of the in-line four-cylinder internal combustion engine E.

The oil pump 70 which is a hydraulic supply source is a trochoid pump, an inner rotor integrated with the drive shaft 71 rotates an outer rotor engaged with the inner rotor in the vicinity of the inner rotor, and oil is taken and discharged depending upon the variation of volume between the rotors.

An inlet 70a of the oil pump 70 is open downward (see Fig. 6), a suction pipe 73 is coupled to the inlet 70a and is extended downward in the oil pan 15, and an oil strainer 74 is arranged in a state in which the lower end is brought close to the bottom of the oil pan 15 (see Fig. 2).
Therefore, when the oil pump 70 is driven, oil that accumulates in the oil pan 15 is led to the suction pipe 73 via the oil strainer 74 and is pumped up.

A discharge port 70b of the oil pump 70 is also open downward, as shown in Figs. 2 and 6, one end of an oil supply pipe 75 forming a first oil supply passage A1 is coupled to the discharge port 70b, the oil supply pipe 75 is extended on the diagonal right side in front (on the left side in Fig. 6), detouring in the oil pan 15 downward, and the other end is coupled to an inlet 75a open on the downside of the end of a second oil supply passage A2 bored backward from an inflow port 76a (see Fig. 7) of an oil filter 76 protruded in the vicinity of the right end of the front of the lower crankcase 11L.

Referring to Figs. 6 and 7, an oil cooler 77 is protruded abreast on the left side (on the right side in Figs. 6, 7) of the oil filter 76 arranged in the vicinity of the right end in the front of the lower crankcase 11L, and an oil cooler housing 78 including an inflow port 78a and an outflow port 78b of the oil cooler 77 is formed in a part to which the oil cooler 77 is attached in the front of the lower crankcase 11L.
The balancer 95 is arranged next to the left side of the oil cooler housing 78 (see Fig. 6).

As shown in Fig. 6, an outflow cylinder 76b protruded at the back of the oil filter 76 communicates with a third oil supply passage A3 bored sideways and the third oil supply passage A3 communicates with the inflow port 78a of the oil cooler housing 78.
A fourth oil supply passage A4 is bored backward from the outflow port 78b in the center of the oil cooler housing 78 (see Figs. 6 and 7).

A main gallery A5 which is a fifth oil supply passage is bored in parallel with the crankshaft 10 on the downside of the crankshaft 10 so that the main gallery is perpendicular to the fourth oil supply passage A4.
The main gallery A5 pierces the five journal walls 11Lw of the lower crankcase 11L and an oil branch supply passage A6 is bored toward each journal bearing in each journal wall 11Lw.

Referring to Fig. 2, an oil supply passage B1 for supplying oil diagonally upward to the side of the transmission 50 at the back from the rear end of the oil supply passage A4 is bored and an oil supply passage B2 for supplying oil to a bearing of the main shaft 51 in the upper crankcase 11U is bored in continuity to the oil supply passage B1.

Referring to Figs. 2 and 6, a first oil supply passage C1 for supplying oil to the cam chain tensioner 43 rightward on the way of the oil supply passage B1 in the lower crankcase 11L is also bored with the first oil supply passage branched, reaches the rightmost journal wall 11Lw, is bent upward from its right end, and is open to the joined face.

A recessed portion having suitable volume is made on the joined face of the rightmost journal wall 11Uw of the upper crankcase 11U opposite to an opening of the first oil supply passage C1 and the recessed portion functions as an oil reservoir Ca because an opening of the recessed portion is covered by the joined face of the journal wall 11Lw of the lower crankcase 11L except the opening of the first oil supply passage C1.

A second oil supply passage C2 is bored diagonally toward the face joined to the cylinder block 12 from the oil reservoir Ca along the joined face of the journal wall 11Uw in the upper crankcase 11U.
The second oil supply passage C2 is connected to a third oil supply passage C3 bored in the rear of the right side wall of the cylinder block 12.

The third oil supply passage C3 in the cylinder block 12 is bent once backward and is bent again after the third oil supply passage is bored in an axial direction of the cylinder from the face joined to the upper crankcase 11U and communicates with a fourth oil supply passage C4 bored in the cylinder head 13 through labyrinth structure Cb formed on the face joined to the cylinder head 13.

The fourth oil supply passage C4 is bent in L-type, is connected to an inflow port of the cam chain tensioner 43, and supplies oil to the cam chain tensioner 43.
The labyrinth structure Cb on the way means a labyrinth on the joined face between the cylinder block 12 and the cylinder head 13 and has effect as a filter.

In the meantime, referring to Figs. 2 and 7, a first oil supply passage D1 for supplying oil for cooling each piston right upward from the outflow port 78b of the oil cooler housing 78 in the lower crankcase 11L is bored up to the joined face on the upside.
A communicating hole 98 is also formed from the outflow port 78b of the oil cooler housing 78 toward the balancer shaft 95a of the balancer 95 adjacent on the left side so as to supply oil for lubricating the balancer 95 (see Figs. 6 and 7).

The cavity 28 formed in the central journal wall 11Uw out of the five journal walls 11Uw of the upper crankcase 11U is open to the joined face of the case and a groove for a second oil supply passage D2 is formed up to a part where an opening of the cavity 28 in the center of the joined face of the upper crankcase 11U and the first oil supply passage D1 are opposite (see Fig. 7).

That is, the second oil supply passage D2 is formed so that a part of an opening of the groove formed in the upper crankcase 11U is covered with the joined face of the lower crankcase 11L.
A filter 80 having plural small holes is installed at a connection of the joined face and the second oil supply passage D2 at an upper end of the first oil supply passage D1.
The filter 80 is formed by mechanical working or press working.

The cavity 28 with which the second oil supply passage D2 communicates and which is formed in the central journal wall 11Uw of the upper crankcase 11U is covered with the joined face of the lower crankcase 11L to be an oil reservoir Da that has suitable volume and can temporarily reserve oil though the oil reservoir is also a third oil supply passage.

As described above, as the oil reservoir Da is formed with the oil reservoir open to the joined face of the upper crankcase 11U, the oil reservoir Da can be simultaneously formed in casting the upper crankcase 11U and no mechanical working is required.
As the oil reservoir Da is formed because a part of the opening of the oil reservoir Da is closed by the joined face of the lower crankcase 11L, no dedicated cover member is separately required and the number of parts can be reduced.

As described above, referring to Fig. 5, as the tapped hole 26f is formed from the face joined to the cylinder head 13 in the cylinder block 12 to the oil reservoir Da, the stud bolt 25f that pierces the cylinder head 13 and the cylinder block 12 is screwed into the tapped hole 26f and a part of the end is protruded into the oil reservoir Da, the concentration in a part of stress that acts on the vicinity of the tapped hole of the upper crankcase 11U by screwing and tightening the stud bolt 25f can be reduced.
As this stress concentration reducing structure is formed utilizing the oil reservoir Da for stably supplying oil to oil jets 81Lj, 81Rj, 87Lj described later, no dedicated structure is separately required and working for the structure is also not required.

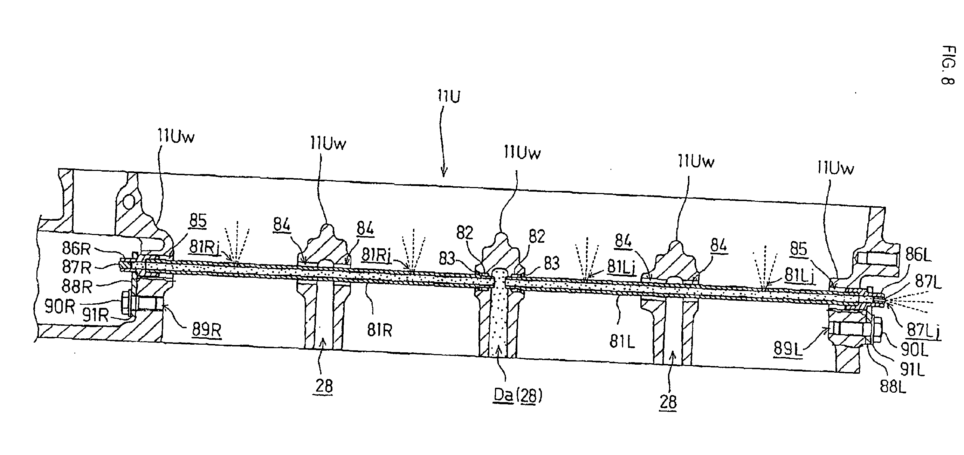

Referring to Fig. 8, inner ends of left and right oil jet pipings 81L, 81R for cooling each piston as linear pipy members are fitted from both left and right sides in space on the upside of the oil reservoir Da and the pipes are extended outside sideways (in Fig. 8, the left and the right are reverse).
The piston cooling oil jets 81Lj, 81Rj as oil jet holes are bored by two sideways toward each cylinder bore 12c on the upside in each intermediate position of the five adjacent journal walls 11Uw on the left and right oil jet pipings 81L, 81R.

Circular holes are coaxially formed in a predetermined position on the right and left side walls forming the oil reservoir Da, the inner ends of the left and right oil jet pipings 81L, 81R are fitted into the circular holes via collars 82, 82 and O-rings 83, 83, and an oil inlet which is an opening of the inner end is opposite to the oil reservoir Da.
The left and right oil jet pipings 81L, 81R pierce circular holes 84, 84 of both left and right journal walls 11Uw, 11Uw adjacent to the central journal wall 11Uw and their outer ends are inserted into circular holes 85, 85 formed in left and right outermost journal walls 11Uw, 11Uw.

The outer ends of the left and right oil jet pipings 81L, 81R are covered with cylindrical cap members 86L, 86R.
The cap members 86L, 86R are formed so that it axially has inside diameters in two sizes and outside diameters in two sizes and the oil jet pipings 81L, 81R are covered with the cap members 86L, 86R by press-fitting the oil jet pipings 81L, 81R into parts having larger inside diameters equal to outside diameters of the oil jet pipings 81L, 81R.

Parts having larger outside diameters of the cap members 86L, 86R are press-fitted into the circular holes 85, 85 formed in the left and right outermost journal walls 11Uw, 11Uw and the outer ends of the oil jet pipings 81L, 81R are fastened to and supported by the left and right outermost journal walls 11Uw, 11Uw via the cap members 86L, 86R.
A part of the parts having the larger outside diameters and parts having smaller outside diameters respectively of the cap members 86L, 86R are protruded outside.

A cylindrical oil jet member 87L at the end of which an oil jet 87Lj for cooling the generator is formed is press-fitted, as an oil jet hole, into an outside opening of the smaller inside diameter part of the left cap member 86L and a plug member 87R is press-fitted into an outside opening of the smaller inside diameter part of the right cap member 86R to close the opening.

Circular holes 88La, 88Ra at bases of plate fitting stays 88L, 88R are press-fitted into the parts having the smaller outside diameters and protruded outside of the cap members 86L, 86R.
Clamping bolts 90L, 90R are screwed and tightened via washers 91L, 91R from the outside after circular holes 88La, 88Ra at bases of the fitting stays 88L, 88R are aligned with tapped holes 89L, 89R formed in each predetermined position of the left and right outermost journal walls 11Uw, 11Uw.

As for a method of mounting the left oil jet piping 81L, first, the fitting stay 88L is integrally fastened to the outer end of the oil jet piping 81L via the cap member 86L beforehand with predetermined relative positional relation kept.

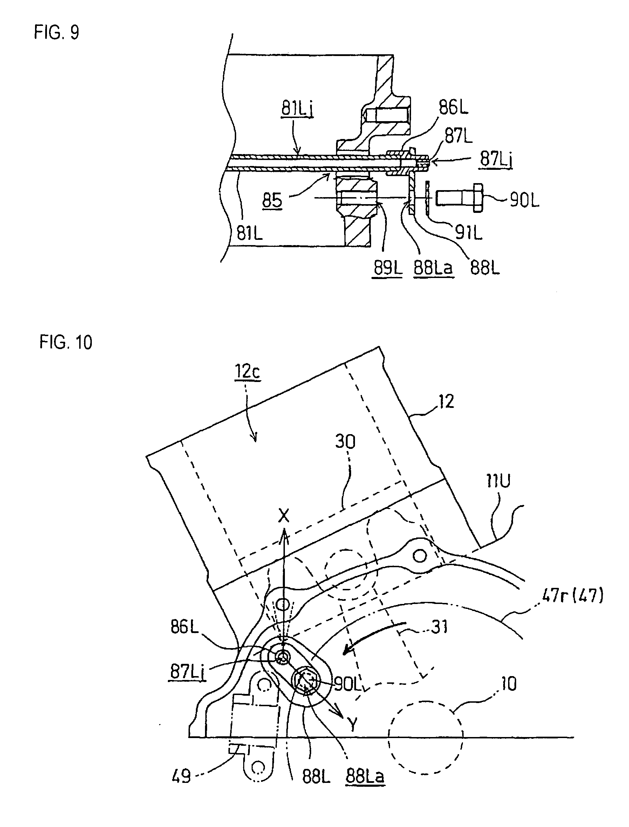

That is, as shown in Fig. 10, the oil jet piping 81L and the fitting stay 88L are integrally fastened so that a direction X in which the oil jet 81Lj for cooling each piston bored on the oil jet piping 81L exists and a direction Y in which the circular hole 88La at the base of the fitting stay 88L exists form a predetermined relative angle based upon a central axis of the oil jet piping 81L.

At the same time when the oil jet piping 81L to which the fitting stay 88L is integrally fastened via the cap member 86L as described above is inserted into the circular hole 85 of the left outermost journal wall 11Uw from its inner end and pierces the journal wall (see Fig. 9), further pierces the circular hole 84 of the journal wall 11Uw on the way and is fitted into the circular hole of the central journal wall 11Uw via the collar 82 and the 0-ring 83, the cap member 86L is press-fitted into the circular hole 85.

In press-fitting, when the circular hole 88La at the base of the fitting stay 88L is matched with the tapped hole 89L formed in a predetermined position of the left outermost journal wall 11Uw, turning the fitting stay 88L integrally with the oil jet piping 81L, the oil jet 81Lj for cooling each piston bored on the oil jet piping 81L can be easily set to a direction which is substantially right upward as shown in Fig. 10 and in which oil is efficiently jetted to each piston 30 reciprocated in the cylinder bore 12c.

The oil jet 81Lj for cooling each piston can be fixed in an optimum direction by making the clamping bolt 90L pierce the circular hole 88La at the base via the washer 91L, by screwing and tightening the clamping bolt into the tapped hole 89L after the above-mentioned setting.

As the other right fitting structure of the oil jet piping 81R is substantially similar to the oil jet piping 81L, the oil jet 81Rj for cooling each piston can be fixed in an optimum direction by the similar method.

However, the right fitting stay 88R is a little larger than the left fitting stay 88L and has a little longer distance between the circular hole at the end and the circular hole at the base.
Therefore, as the tapped hole formed in the predetermined position of the journal wall 11Uw and the circular hole at the base are not matched when the right oil jet piping and the left oil jet piping are mistaken and the clamping bolt cannot be screwed, it can be known that the right one and the left one are mistaken and wrong mounting can be prevented.

The left and right oil jet pipings 81L, 81R that pierce the five journal walls 11Uw of the upper crankcase 11U and are fitted to the journal walls as described above enable effectively jetting oil to the piston 30 in the cylinder bore 12c to which each oil jet 81Lj, 81Rj for cooling the corresponding piston corresponds and efficiently cooling each piston 30.

The oil jet member 87L is press-fitted to the left end of the left piping 81L for jetting oil and oil is jetted leftward from the oil jet 87Lj for cooling the generator of the oil jet member 87L.
The oil jet 87Lj for cooling the generator does not jet oil directly to the AC generator 47 but jets oil toward annular space between the peripheral surface of the outer rotor 47r of the AC generator 47 and the inner surface of the generator cover 48 to cool the AC generator 47.

As shown in Fig. 10, when the oil jet 87Lj for cooling the generator is viewed in a direction of the crankshaft, the oil jet 87Lj for cooling the generator is inside the generator cover 48 and is located on the upside of the pulser coil 49 close to the front of the outer rotor 47r on the diagonal upside in front in the vicinity of the outer periphery of the outer rotor 47r of the AC generator 47.
In the front view shown in Fig. 7, the oil jet 87Lj for cooling the generator is located on the right side (on the left side in Fig. 7) of the outer rotor 47r and the pulser coil 49 respectively overlapped.

Therefore, as oil is jetted to space around the outer rotor 47r from the oil jet 87Lj for cooling the generator, the oil is diffused, however, the space in which the oil is diffused is the annular space between the peripheral surface of the outer rotor 47r of the AC generator 47 and the inner surface of the generator cover 48 and is substantially limited to space on the upside of the pulser coil 49 and on the diagonal upside in front of the outer rotor 47r.
The oil diffused space is a part of space provided to arrange the pulser coil 49.

As the outer rotor 47r of the AC generator 47 is turned counterclockwise as shown by an arrow in a left side view shown in Fig. 10, the pulser coil 49 is located next to an oil jetted area on the downstream side in a rotational direction of the oil jetted area from the oil jet 87Lj for cooling the generator and oil is diffused in substantially limited small space without the diffusion in large space of oil described above, the oil diffused space is filled with atomized oil.

As the outer rotor 47r is turned with it exposing its peripheral surface to the space which is fitted with oil and in which the oil is diffused, the oil is uniformly sprayed to the peripheral surface of the outer rotor 47r all around and the outer rotor 47r can be uniformly and efficiently cooled.

Oil jetted from the oil jet 87Lj for cooling the generator hits the bottom (the inner surface to which the oil jet 87Lj for cooling the generator is opposite) of the bowl-like generator cover 48 and when the oil is passed along the bottom and is supplied to the inner stator 47s of the AC generator 47, the inner stator 47s is cooled.

A rib not shown is formed from the vicinity opposite to the oil jet 87Lj for cooling the generator toward a stator boss at the bottom of the generator cover 48 and oil is guided to the inner stator 47s by this rib.
As described above, oil is supplied to both the outer rotor 47r and the inner stator 47s of the AC generator 47 and the AC generator 47 can be efficiently cooled.

As the oil jet 87Lj for cooling the generator does not jet oil directly to the outer rotor 47r but jets oil toward the space in the vicinity and the oil is diffused in the space, friction to the turning of the outer rotor 47r is never increased.

As the oil diffused space in which oil is jetted from the oil jet 87Lj for cooling the generator and is diffused utilizes a part of space provided to arrange the pulser coil 49, the internal combustion engine can be prevented from being large-sized by separately providing space.

As described above, as the oil jet piping 81L for cooling each piston is utilized for means for supplying oil to the oil jet 87Lj for cooling the generator to cool the AC generator 47, an oil passage for cooling the AC generator 47 is not required to be newly formed, the structure is simplified, processing man-hours and the number of parts are reduced, and the cost can be reduced.

As the paths of oil supply are configured as described above, oil discharged from the discharge port 70b when the oil pump 70 is driven flows into the oil filter 76 from the second oil supply passage A2 through the first oil supply passage A1 (the oil supply pipe 75), impurity such as dust is removed there, the oil flows into the third oil supply passage A3, flows into the oil cooler 77 through the inflow port 78a and is cooled there, the oil flows from the outflow port 78b into the fourth oil supply passage A4, reaches the main gallery A5, flows from the main gallery A5 to the crankshaft 10 and into the oil supply passages B1, B2 through the oil branch supply passage A6, and the oil is supplied to hydraulic equipment such as the cam chain tensioner 43 through each part to be lubricated such as the transmission 50 and the oil supply passages C1, C2, C3, C4.

In the meantime, oil divided from the outflow port 78b of the oil cooler 77 into a first oil supply passage D1 reaches the oil reservoir Da from a second oil supply passage D2 via a filter 80 on the joined faces of the upper crankcase 11U and the lower crankcase 11L, is distributed from the oil reservoir Da to the left and right pipings 81L, 81R for jetting oil, is jetted from the oil jets 81Lj, 81Rj for cooling each piston and the oil jet 87Lj for cooling the generator of the pipings 81L, 81R for jetting oil, each piston 30 is cooled by the oil jetted from the oil jets 81Lj, 81Rj for cooling each piston, and the AC generator 47 is cooled by the oil jetted from the oil jet 87Lj for cooling the generator.

As the oil reservoir Da is provided on the upstream side on which oil is distributed to the left and right oil jet pipings 81L, 81R, the pulsation of the oil discharge pressure of the oil pump 70 is attenuated, oil is distributed to the oil jet pipings 81L, 81R, is stably supplied to the oil jets 81Lj, 81Rj for cooling each piston and the oil jet 87Lj for cooling the generator, is stably jetted from the oil jets 81Lj, 81Rj for cooling each piston and the oil jet 87Lj for cooling the generator, and each piston 30 and the AC generator 47 can be more efficiently cooled.

Besides, as described above, as the tapped hole 26f is formed from the joined face of the cylinder block 12 to the cylinder head 13 to the oil reservoir Da, the stud bolt 25f that pierces the cylinder head 13 and the cylinder block 12 is screwed into the tapped hole 26f and the end is protruded into the oil reservoir Da, the concentration in a part of stress that acts on the vicinity of the tapped hole of the upper crankcase 11U by screwing and tightening the stud bolt 25f can be reduced.
As the stress concentration reducing structure is configured utilizing the oil reservoir Da for stably supplying oil to the oil jets 81Lj, 81Rj, 87Lj, dedicated structure is not required separately and working for it is not required.

As the oil reservoir Da utilizes the cavity 28 of the central journal wall 11Uw, oil is uniformly distributed to the left and right oil jet pipings 81L, 81R, is uniformly supplied to the four oil jets 81Lj, 81Rj for cooling each piston 30, and can be jetted from them.

As the oil jets 81Lj, 81Rj for cooling each piston are formed on the left and right oil jet pipings 81L, 81R, plural oil jets 81Lj, 81Rj for cooling each piston can be concentrated on the oil jet pipings 81L, 81R as a tube-like member, compared with a case that an oil jet is attached to each journal wall of the crankcase and therefore, the internal combustion engine is excellent in ease of assembly.

In this embodiment, the two oil jet pipings 81L, 81R are extended sideways from the oil reservoir Da, however, only one oil jet piping is extended and an inlet open to the oil reservoir may be also provided in a central location that pierces the oil reservoir.

In this water-cooled internal combustion engine E, a cooling system that the drive shaft 71 and the drive shaft 101 are coupled and cooling water is supplied by the water pump 100 driven in interlock with the oil pump 70 is configured as a supply source for cooling water.
In the cooling system of this internal combustion engine E, referring to Fig. 1, the water pump 100 is attached to the rear of the left side wall of the lower crankcase 11L as described above, a radiator 105 is arranged in front of the internal combustion engine E, and a thermostat 110 is coupled to an outflow pipe 108 extended backward from the downside of the intake port 33 of the cylinder at the right end of the cylinder head 13.

The other end of a radiator inflow hose 106 one end of which is connected to a connecting pipe 110a protruded on the right side of the thermostat 110 is connected to an inflow port of the radiator 105 detouring forward on the right side of the cylinder block 12 as shown in Figs. 2 and 3.
The connecting pipe 110a is protruded in space between the cam chain tensioner 43 and the overhanging part 11Ua of the upper crankcase 11U as shown in Fig. 2, the radiator inflow hose 106 passes the space, and is extended rightward.

The water pump 100 is configured by a pump body 100a in which a pump house for housing an impeller 102 integrally turned with the drive shaft 101 journals the drive shaft 101 and a pump cover 100b (see Fig. 6) and the other end of a radiator outflow hose 107 one end of which is connected to a connecting pipe 103a extended in front of a suction port of the pump cover 100b is connected to an outflow port of the radiator 105 arranged along a lower part of the left side of the lower crankcase 11L.

A bypass hose 112 one end of which is connected to a connecting pipe 103b extended on the upside of the same suction port of the pump cover 100b is extended upward along each rear of the left sides of the lower crankcase 11L and the upper crankcase 11U as shown in Figs. 1 and 3, is bent on the diagonal right side forward on a top face of the upper crankcase 11U, passes the left side of the starter motor 60, is extended rightward and diagonally upward between the starter motor 60 and the cylinder block 12 or the cylinder head 13 as shown in the plan in Fig. 3, and the other end is connected to a bypass outflow port on the upside of the thermostat 110.

Further, a pump discharge hose 113 one end of which is connected to a connecting pipe 103c extended from a discharge port of the pump cover 100b of the water pump 100 is extended upward along each rear of the left sides of the lower crankcase 11L and the upper crankcase 11U, is bent forward, and the other end is connected to an inflow connecting pipe 115b extended at the diagonal back of a joint member 115 protruded from the left side of the cylinder block 12.

The joint member 115 has internal space 115a open to a joined face to the cylinder block 12 and longer in height and a flange part at the edge of an opening is fastened to the cylinder block 12 by bolts 116 in three locations (see Figs. 1 and 4).

As shown in Fig. 4, a lower inflow port 120 and an upper inflow port 121 respectively vertically partitioned are formed opposite to the opening of the internal space 115a of the joint member 115 on the left side wall of the cylinder block 12, the lower inflow port 120 communicates with a first water jacket 12w formed around the cylinder bore 12c of the cylinder block 12, a communicating hole 122 bent upward ranges to a communicating hole 123 of the cylinder head 13 from the upper inflow port 121, and the communicating hole 123 communicates with a second water jacket 13w of the cylinder head 13.

As shown in Fig. 1, a branch connecting pipe 115c is extended diagonally forward from the joint member 115, an inflow hose 117 for the oil cooler one end of which is connected to the branch connecting pipe 115c is extended diagonally forward and downward, and the other end is connected to a water inflow port of the oil cooler 77 protruded from the front of the lower crankcase 11L.
An outflow hose 118 extended from a water outflow port of the oil cooler 77 is coupled to the radiator outflow hole 107 and returns cooling water via the oil cooler 77 to the water pump 100 utilizing a part of the radiator outflow hose 107.

The cooling system of this internal combustion engine E is configured as described above, cooling water discharged by the drive of the water pump 100 reaches the joint member 115 of the cylinder block 12 through the pump discharge hose 113, the lower inflow port 120 and the upper inflow port 121 respectively on the left side wall of the cylinder block 12 branch from the joint member 115 of the cylinder block 12, cooling water that flows into the lower inflow port 120 flows rightward in the first water jacket 12w of the cylinder block 12 and cools the cylinder block 12, cooling water that flows into the upper inflow port 121 flows rightward in the second water jacket 13w of the cylinder head 13 through the communicating holes 122, 123 and cools the cylinder head 13.

A gasket (not shown) held between the joined faces of the cylinder block 12 and the cylinder head 13 partitions the first water jacket 12w of the cylinder block 12 and the second water jacket 13w of the cylinder head 13, however, a communicating hole is bored in a part of the right end, cooling water that cools the cylinder block 12 flows from the first water jacket 12w into the second water jacket 13w, cooling water that flows independently in the first water jacket 12w and in the second water jacket 13w meets, the cooling water flows out of the outflow pipe 108 extended backward at the right end of the rear of the cylinder head 13, and reaches the thermostat 110.

The thermostat 110 controls the circulation and the cutoff of cooling water to the radiator 105 according to the warming up of the internal combustion engine E.
In warming up, warming up is accelerated by making cooling water that passes the cylinder block 12 and the cylinder head 13 flow into the bypass hose 112 without passing the radiator 105 and returning it to the water pump 100, in normal operation after the warming up, the cooling water is made to flow into the radiator 105 by switching to the flow into the radiator inflow hose 106, the temperature of the cooling water is lowered by circulating the cooling water in the radiator, and the cooling of the cylinder block 12 and the cylinder head 13 is accelerated.

In the meantime, cooling water discharged into the pump discharge hose 113 from the water pump 100 is divided into the lower inflow port 120 and the upper inflow port 121 of the cylinder block 12 via the joint member 115, and the cooling water is circulated so as to cool oil so that the cooling water is also divided into the inflow hose 117 in the internal space 115a of the joint member 115, reaches the oil cooler 77 and returns to the water pump 100 via a part of the radiator outflow hose 107 through the outflow hose 118 from the oil cooler 77.

As described above, oil cooled by the oil cooler 77 is divided from the outflow port 78b of the oil cooler housing 78 into the first oil supply passage D1, is distributed to the left and right pipings 81L, 81R for jetting oil through the second oil supply passage D2 and the oil reservoir Da, is jetted to each piston 30 from the oil jets 81Lj, 81Rj for cooling each piston to cool each piston 30, and is jetted from the oil jet 87Lj for cooling the generator to cool the AC generator 47.

As oil for cooling is divided at the outflow port 78b on the immediate downstream side of the oil cooler 77 and is supplied to parts to be cooled of each piston 30 and the AC generator 47, the parts to be cooled can be cooled by oil kept at possibly low temperature.
E...Internal combustion engine,
10...Crankshaft,
11...Crankcase,
30...Piston,
47...AC generator,
48...Generator cover,
49...Pulser coil,
70...Oil pump,
81L, 81R...Piping for jetting oil,
81Lj, 81Rj...Oil jet for cooling piston,
87R...Plug member,
87L...Oil jet member,
87Lj...Oil jet for cooling generator,
D1, D2 ... Oil supply passage for cooling piston,
Da...Oil reservoir.

## Claims

1. Cooling structure for a vehicular generator that cools the generator provided to one end of a crankshaft (10) by jetting oil, comprising:
a piston cooling oil passage on the way of which a piston cooling oil jet for jetting oil to the piston (30) is formed and which is arranged on an axis parallel to the crankshaft (10) ,
**characterized in that**
a generator cooling oil jet that cools the generator by jetting oil is provided to the end of the piston cooling oil passage.

2. The cooling structure for the vehicular generator according to Claim 1, further comprising:
an engine speed detector that detects the number of revolutions of the crankshaft (10), that is arranged next to space around the generator toward which oil is jetted from the generator cooling oil jet.

3. The cooling structure for the vehicular generator according to Claim 1 or 2,
wherein the generator cooling oil jet is located outside the generator when the oil jet is viewed in a direction of the crankshaft (10), and
the oil jet jets oil in a direction parallel to the crankshaft (10).

## Patentansprüche

1. Kühlanordnung für einen Fahrzeuggenerator, der den an einem Ende einer Kurbelwelle (10) bereitgestellten Generator durch Ausstoßen von Öl kühlt, umfassend:
einen Kolbenkühlungs-Ölkanal, auf dessen Weg eine Kolbenkühlungs-Öldüse zum Ausstoßen von Öl auf den Kolben (30) ausgebildet ist und der auf einer Achse parallel zu der Kurbelwelle (10) angeordnet ist,
**dadurch gekennzeichnet, dass**
eine Generatorkühlungs-Öldüse, die den Generator durch Ausstoßen von Öl kühlt, an dem Ende des Kolbenkühlungs-Ölkanals bereitgestellt ist.

2. Kühlanordnung für den Fahrzeuggenerator gemäß Anspruch 1, ferner umfassend: einen Motordrehzahldetektor, der die Anzahl der Umdrehungen der Kurbelwelle (10) erfasst, der nahe dem Raum um den Generator herum angeordnet ist, in dessen Richtung Öl aus der Generatorkühlungs-Öldüse ausgestoßen wird.

3. Kühlanordnung für den Fahrzeuggenerator gemäß Anspruch 1 oder 2,
worin die Generatorkühlungs-Öldüse außerhalb des Generators angeordnet ist, bei Betrachtung der Öldüse in Richtung der Kurbelwelle (10), und
die Öldüse Öl in einer Richtung parallel zu der Kurbelwelle (10) ausstößt.

## Revendications

1. Structure de refroidissement pour un générateur de véhicule refroidissant le générateur disposé à une extrémité d'un vilebrequin (10) en projetant de l'huile, comprenant :
un passage d'huile de refroidissement de piston sur le passage duquel un jet d'huile de refroidissement du piston pour projeter de l'huile sur le piston (30) est formé et disposé sur un axe parallèle au vilebrequin (10),
**caractérisé en ce que**
un jet d'huile de refroidissement du générateur refroidissant le générateur en projetant de l'huile est disposé à l'extrémité du passage d'huile de refroidissement du piston.

2. Structure de refroidissement pour un générateur de véhicule selon la revendication 1, comprenant également :
un détecteur de vitesse du moteur, qui détecte le nombre de tours du vilebrequin (10), disposé à côté de l'espace autour du générateur vers lequel l'huile est projetée à partir du jet d'huile de refroidissement du générateur.

3. Structure de refroidissement pour un générateur de véhicule selon la revendication 1 ou 2,
dans laquelle le jet d'huile de refroidissement du générateur est situé à l'extérieur du générateur quand le jet d'huile est vu dans la direction du vilebrequin (10) ; et
le jet d'huile projette de l'huile dans une direction parallèle au vilebrequin (10).
